# EUROPEAN PATENT APPLICATION

(11) **EP 2 189 871 A2**
(43) Date of publication of application: **26.05.2010**
(21) Application number: 09175381.4
(22) Date of filing: 09.11.2009
(51) Int. Cl.: G06F 1/16, G06F 3/045

(54) **Mobile terminal having touch screen panel**

(30) Priority: 19.11.2008 KR 20080114963
(71) Applicant: SAMSUNG ELECTRONICS CO., LTD., Suwon-si, Gyeonggi-do (KR)
(72) Inventor: Hwang, Jae Soon, Gyeonggi-do (KR); Seo, Ho Soo, Gyeonggi-do (KR)
(74) Representative: Jenkins, Richard Gavin

(57) **Abstract**

A mobile terminal includes a touch screen panel installed in an upper surface of a display unit formed in an upper surface of the mobile terminal. The touch screen panel includes an upper panel and a lower panel disposed opposite each other; and a detection unit installed in the touch screen panel beneath the lower panel thereof. The detection unit detects an approach of an external object and for determining whether to allow or invalidate an input of a manipulation instruction from a user through the touch screen panel. A portion of lower panel of the touch screen panel is not included in a portion of the touch screen panel at which the detection unit is positioned. Thereby, diffused reflection of light around the detection sensor can be reduced, thereby preventing an erroneous operation of the detection unit when detecting the approach of an external object.

## Description

### TECHNICAL FIELD OF THE INVENTION

The present invention relates to a mobile terminal having a touch screen panel, and more particularly, to a mobile terminal having a touch screen panel that can prevent an erroneous operation of a detection sensor for detecting the approach of an external object.

### BACKGROUND OF THE INVENTION

In general, a mobile terminal is an electronic device that enables a user to freely use a function, such as wireless communication, network connection, and digital broadcasting reception, almost regardless of time and location. Recently, mobile terminals have been developed to perform functions such as Internet connection and digital broadcasting reception as well as a communication function. Further, functions such as document writing and a game player are added to the mobile terminal.

Nowadays, the mobile terminal has a small size and thickness according to a user request. According to such a trend, interest has increased in new input devices for solving a problem of a conventional button type input device occupying a great bulk. Particularly, an input method using a touch screen different from a conventional input method has been highlighted.

In general, a touch screen is an input device that forms an interface between an information communication device using various displays and a user, and enables the user to directly contact a screen using an input tool, such as a finger or a touch pen. Because the user can easily touch the touch screen using the input tool, the touch screen can be used in various appliances, such as an automated teller machine (ATM), personal digital assistant (PDA), and mobile phone, and in many fields, such as in a bank, government and public offices, and for sightseeing and traffic guidance information devices.

Various types of touch screens have been developed, such as a resistance film type, capacitance type, supersonic wave type, infrared ray type, and surface elastic wave type. Because the resistance film type touch screen is cheap and can use various input tools, such as a finger and a touch pen, the resistance film type touch screen is widely used.

In a mobile phone terminal that includes a touch screen, when using an audio communication function, the user holds the mobile terminal to the user's ear in order to perform a communication. If the user's ear or cheek touches the touch screen of the mobile terminal, the mobile terminal may erroneously recognize this as the input of a user instruction and may perform a corresponding erroneous operation. Therefore, in order to prevent such an erroneous operation, a proximity sensor detects the approach of the user's ear or cheek, thereby preventing an erroneous operation of the touch screen.

In general, in the resistance film type touch screen, an upper panel and a lower panel are divided by a spacer. The upper panel includes an upper substrate and an upper conductive film, and the lower panel includes a lower substrate and a lower conductive film. However, because the lower substrate for supporting the upper substrate is made of a transparent material such as a plastic substrate, light emitted from a proximity sensor is diffusedly reflected in the lower substrate, and thus a problem may occur that a detection sensor for detecting the approach of the user's ear or cheek is erroneously operated.

Therefore, a mobile terminal having a touch screen panel that can prevent an erroneous operation of a detection sensor for detecting the approach of an external object is desired.

### SUMMARY OF THE INVENTION

To address the above-discussed deficiencies of the prior art, it is a primary object to provide a mobile terminal that includes a touch screen panel that can prevent an erroneous operation of a detection sensor for detecting the approach of an external object.

In accordance with an aspect of the present invention, a mobile terminal includes: a touch screen panel installed in an upper surface of a display unit formed in an upper surface of the mobile terminal. The touch screen panel includes an upper panel and a lower panel disposed opposite each other; and a detection unit installed in the touch screen panel beneath the lower panel thereof for detecting an approach of an external object and for determining whether to allow or invalidate an input of a manipulation instruction from a user through the touch screen panel. A portion of the touch screen panel at which the detection unit is positioned does not include the lower panel of the touch screen panel..

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates a perspective view of a configuration of a general slide type mobile terminal;

FIGURE 2 illustrates a cross-sectional view of a structure of a general resistance film type touch screen panel;

FIGURE 3A illustrates a cross-sectional view of a structure of a detection unit and a touch screen panel around the detection unit in a mobile terminal having a touch screen panel according to an exemplary embodiment of the present invention; and

FIGURE 3B illustrates a plan view of the detection unit in the mobile terminal having the touch screen panel of FIGURE 3A.

### DETAILED DESCRIPTION OF THE INVENTION

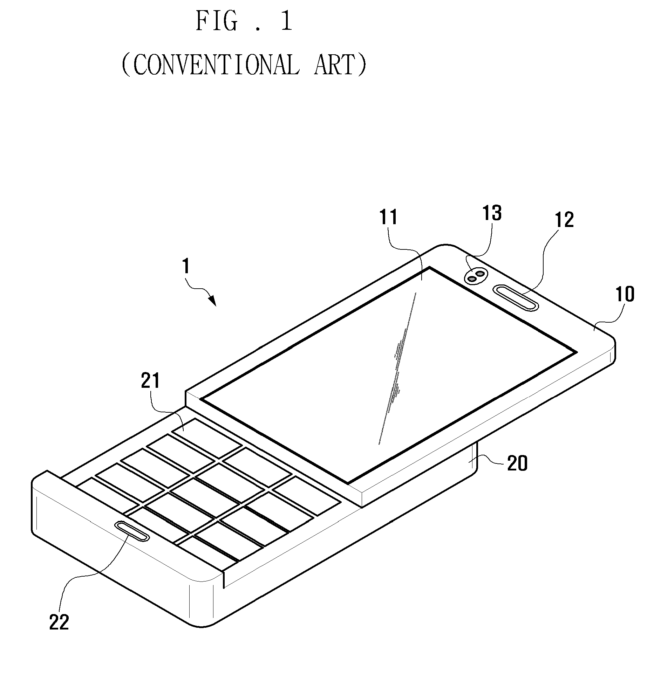

FIGURES 1 through 3B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged _mobile communications device.

In the following description, for convenience of description, a mobile terminal according to an exemplary embodiment of the present invention is described as a mobile communication terminal; however, the present invention is not limited thereto. The mobile terminal according to the present exemplary embodiment has a resistance film type touch screen panel and may be an information and communication device or a multimedia device, such as a mobile communication terminal, mobile phone, Personal Digital Assistant (PDA), smart phone, International Mobile Telecommunication 2000 (IMT-2000) terminal, Code Division Multiple Access (CDMA) terminal, Wideband Code Division Multiple Access (WCDMA) terminal, Global System for Mobile Communication (GSM) terminal, General Packet Radio Service (GPRS) terminal, Enhanced Data GSM Environment (EDGE) terminal, Universal Mobile Telecommunication (UMTS) terminal, digital broadcasting terminal, and applications thereof.

FIGURE 1 illustrates a perspective view of a configuration of a general slide type mobile terminal.

Referring to FIGURE 1, a general mobile terminal 1 includes an upper case 10 including a display unit 11 in an upper surface, and a lower case 20 including a key input unit 21. The upper case 10 can move by sliding along the lower case 20. In this case, either the upper case 10 or the lower case 20 includes a sliding unit (not shown) for guiding the upper case 10 to move by sliding operation.

The display unit 11 includes a touch screen, and performs a function of a user interface for outputting a desired screen to a user and for receiving an instruction from the user. The display unit 11 can use a Liquid Crystal Display (LCD), an Organic Light Emitting Diode (OLED), a Thin Film Transistor (TFT), an electrophoresis technology, and a Laser Induced Thermal Image (LITI) technology. The LCD is an electric device for changing and transmitting electrical information occurring in various devices using the change of a transmittance of liquid crystal, according to a voltage applied, to visible information. The OLED is formed of a self light emitting type organic material using an electroluminescence phenomenon that emits light when a current flows to a fluorescent organic compound.

The key input unit 21 that is configured to receive a manipulation instruction from the user is formed in an upper surface of the lower case 20, and the lower case 20 is exposed to the outside by sliding the upper case 10. FIGURE 1 illustrates an example in which an entire upper surface of the upper case 10 is formed with the display unit 11, however an auxiliary key input unit (not shown) that receives a manipulation instruction from the user can be formed in a lower end portion or a side portion of the upper case 10. The auxiliary key input unit can be formed with a minimum number of function keys necessary for receiving input from the user when the lower case 20 is covered by the upper case 10.

The mobile terminal 1 includes a receiver 12 provided in an upper end portion of the upper case 10 to output a sound signal and a transmitter 22 provided in a lower end portion of the lower case 20 to input a voice signal. The user can hear a voice signal received from another party using the receiver 12 and transmit a voice signal to another party using the transmitter 22.

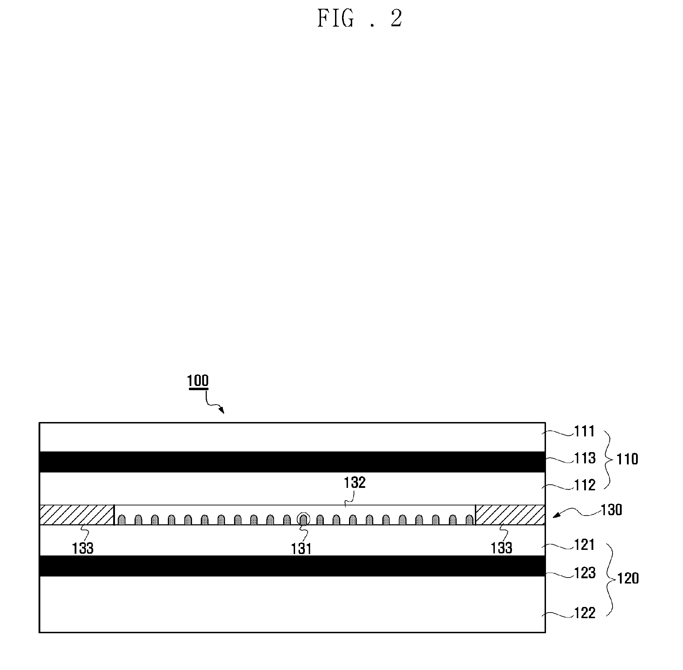

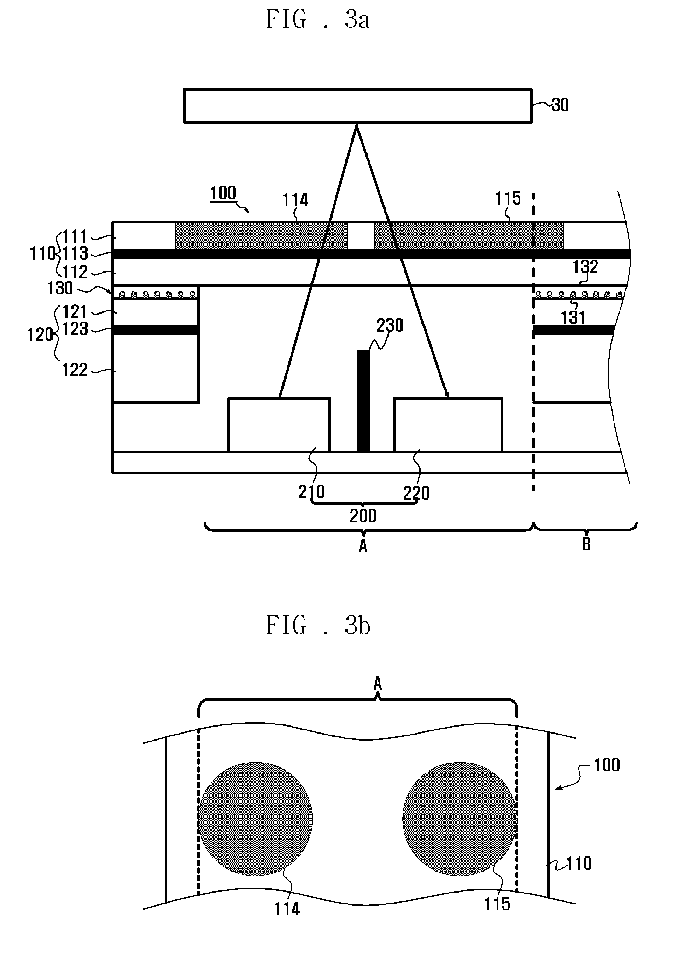

Further, a detection unit 13 is provided in an upper surface of the upper case 10. FIGURE 1 illustrates an example in which the detection unit 13 is installed in an upper end portion of the upper case 10 adjacent to the receiver 12, however the detection unit 13 may be installed adjacent to a lower part of the display unit 11. The detection unit 13 detects an approach of an external object, and subsequently either allows or invalidates an input through a touch screen panel 100 (shown in FIGURE 2). If no detection unit 13 was provided, when the user holds the mobile terminal 1 to their ear in order to perform a communication, if the user's ear or cheek touches a touch screen of the mobile terminal 1, the mobile terminal 1 may recognize this as the input of a user instruction and may erroneously operate. Therefore, in the present invention, when the user holds the mobile terminal 1 to their ear in order to perform a communication, the detection unit 13 detects this state and invalidates an input through the touch screen panel 100, thereby preventing an erroneous operation of the touch screen. A structure of the detection unit 13 is described later in detail with reference to FIGURES 3A and 3B.

As shown in FIGURE 1, the present invention can be applied to the slide type mobile terminal 1 having the display unit 11 of a touch screen form in an upper surface of the upper case 10. Here, the mobile terminal 1 may be various portable electronic devices, such as a mobile phone, wireless receiver, and digital broadcasting receiver.

FIGURE 2 illustrates a cross-sectional view of a structure of a general resistance film type touch screen panel.

Referring to FIGURE 2, a resistance film type touch screen panel 100 includes an upper panel 110 and lower panel 120 installed in an upper surface of the display unit 11 and disposed opposite each other, and a spacer 130 for separating the upper panel 110 and the lower panel 120. The upper panel 110 includes an upper substrate 111 having flexibility for deformation when a manipulation instruction is input by a user, and a transparent upper conductive film 112 coated on a lower surface of the upper substrate 111. The lower panel 120 includes a lower substrate 122 installed at a lower part of the lower panel 120 and for supporting the upper substrate 111, and a transparent lower conduction film 121 coated on an upper surface of the lower substrate 122.

The upper substrate 111 is formed with a film made of a polymer resin having flexibility for deformation when a manipulation instruction is input by the user, for example, when a predetermined force is applied by the user. Further, the upper substrate 111 may be made of a transparent material transmitting light. Preferably, the upper substrate 111 comprises a transparent material such as a Polyethylene Terephthalate (PET) film. In order to protect the upper surface of the upper substrate 111, a coating film (not shown) may be formed on the upper surface of the upper substrate 111.

The lower substrate 122 may be formed with a transparent substrate. Preferably, the lower substrate 122 is a plastic substrate or a glass substrate and can support the upper substrate 111 formed with a film having flexibility.

The upper conductive film 112 is coated on a lower surface of the upper substrate 111, for example, a surface facing towards the lower substrate 122. The upper conductive film 112 can be a transparent conductive film, such as an Indium Tin Oxide (ITO) film. An upper electrode (not shown) electrically connected to the upper conductive film 112 can be disposed at edges of the upper conductive film 112. The lower surface of the upper substrate 111 can be bonded to the upper surface of the upper conductive film 112 using an optical adhesive 113.

The transparent lower conductive film 121 is coated on an upper surface of the lower substrate 122, for example, on a surface facing towards the upper substrate 111, and preferably an ITO film is used, as in the upper conductive film 112. A lower electrode (not shown) electrically connected to the lower conductive film 121 can be disposed at edges of the lower conductive film 121. The upper surface of the lower substrate 122 can be bonded to the lower surface of the lower conductive film 121 using an optical adhesive 123.

A plurality of upper electrode guide lines (not shown) electrically connected to an upper electrode connected to the upper conductive film 112 and a plurality of lower electrode guide lines (not shown) connected to a lower electrode connected to the lower conductive film 121 can be formed in the lower substrate 122. In this case, the upper electrode, lower electrode, upper electrode guide line, and lower electrode guide line can be made of a material having excellent conductivity. Further, the upper electrode, lower electrode, upper electrode guide line, and lower electrode guide line can be designed to have various patterns and dispositions.

The spacer 130 that separates the upper substrate 111 and the lower substrate 122 by a predetermined gap can be formed in an upper surface of the lower conductive film 121 or in a lower surface of the upper conductive film 122. Preferably, the spacer 130 includes a plurality of dot spacers 131 formed in an upper surface of the lower conductive film 121 or in a lower surface of the upper conductive film 112. The plurality of dot spacers 131 comprise an insulative resin material, such as epoxy and acrylic resin. Further, an air gap 132 can be formed between the plurality of dot spacers 131. Therefore, the plurality of dot spacers 131 can uniformly sustain a gap between the upper substrate 111 and the lower substrate 122. When the plurality of dot spacers 131 are formed in the upper surface of the lower conductive film 121 and a predetermined force is applied by the user to the upper substrate 111, , the plurality of dot spacers 131 can contact with the upper conductive film 112. Alternatively, if the plurality of dot spacers 131 are formed in the lower surface of the upper conductive film 112, the plurality of dot spacers 131 can contact with the lower conductive film 121. In both cases, when the upper electrode connected to the upper conductive film 112 and the lower electrode connected to the lower conductive film 121 are electrically connected, an electrical signal is detected according to a resistance value of a touched position, and the touched position can be determined using a magnitude of the detected electrical signal. When the user applies a force to the upper substrate 111, because the plurality of dot spacers 131 are separately disposed, the upper substrate 111 and the lower substrate 122 are prevented from touching at positions other than the touched position.

In order to bond the upper panel 110 and the lower panel 120, an adhesive agent 133, for example an optical adhesive or adhesive tape, can be applied along an edge of opposing surfaces between the upper panel 110 and the lower panel 120. Further, the touch screen panel 100 can be bonded to an upper surface of the display unit 11 at the lower surface of the lower substrate 122 through a separate adhesive layer.

FIGURE 2 illustrates a structure of the touch screen panel 100, however the touch screen panel 100 is not limited thereto, and any structure of a resistance film type touch screen film 100 can be applied.

FIGURE 3A illustrates a cross-sectional view of a structure of the detection unit 13 and the touch screen panel 100 around the detection unit 13 in the mobile terminal 1 according to an exemplary embodiment of the present invention. FIGURE 3B illustrates a plan view of the detection unit 13 in the mobile terminal 1 of FIGURE 3A.

Referring to FIGURE 3A, the touch screen panel 100 is divided into a detection area A at which the detection unit 13 is positioned and a touch area B for receiving a manipulation instruction from a user. For convenience of description, FIGURE 3A illustrates an enlarged structure of the touch screen panel 100.

As described in FIGURE 1, the detection unit 13 is installed at a position at an upper end portion of the mobile terminal 1, for example adjacent to the receiver 12. The detection unit 13 includes a detection sensor 200 for detecting the approach of an external object 30, and light transmittance units 114 and 115 formed in an upper surface of the upper panel 110 at a position corresponding to that at which the detection sensor 200 is positioned.

As shown in FIGURE 3A, the detection sensor 200 includes a light emitting unit 210, light receiving unit 220, and shielding film 230, and is installed in the detection area A beneath the touch screen panel 100. The detection sensor 200 detects the approach of the external object 30 and either allows or invalidates the input of a user instruction through the touch screen panel 100.

The light emitting unit 210 performs a function of emitting light to the outside in order to measure a proximity distance to an external object, and the light receiving unit 220 performs a function of receiving light reflected from an external object. The shielding film 230 prevents light emitted from the light emitting unit 210 from directly entering the light receiving unit 220, thereby preventing an erroneous operation of the detection sensor 200. Preferably, the detection sensor 200 uses a proximity sensor, such as an infrared sensor for detecting whether the external object 30 approaches within a detection area of a predetermined distance using infrared rays. In this case, the light emitting unit 210 of the detection sensor 200 is formed with a Light Emitting Diode (LED) for emitting infrared rays.

FIGURE 3A illustrates a case where the light emitting unit 210 and the light receiving unit 220 of the detection sensor 200 are physically separated by the shielding film 230 provided between the light emitting unit 210 and the light receiving unit 220, however a structure of the detection sensor 200 is not limited thereto and can be changed. For example, the light emitting unit 210 and the light receiving unit 220 may be integrally formed in the detection sensor 200.

As shown in FIGURE 3A, in the mobile terminal 1 that includes the touch screen panel 100 according to the present exemplary embodiment, at a portion of the touch screen panel 100 at which the detection unit 13 is positioned, the lower panel 120 of the touch screen panel 100 can be removed. Specifically, the lower substrate 122 and the lower conductive film 121 corresponding to the portion of the touch screen panel 100 at which the detection unit 13 is positioned are removed.

As shown in FIGURE 3A, by removing the lower substrate 122 and the lower conductive film 121 of the lower panel 120 from the detection area A at which the detection sensor 200 is positioned, the spacer 130 for separating the lower panel 120 from the upper panel 110 is also removed. In this case, because in addition to the plurality of dot spacers 131, the air layer 132 is formed in the spacer 130 between the upper panel 110 and the lower panel 120, internal contamination due to the adhesive agent 133 can be prevented.

As described above, the lower substrate 122 forming the lower panel 120 of the resistance film type touch screen panel 100 is a transparent plastic substrate or a glass substrate. When the detection sensor 200 is installed in a lower part of the touch screen panel 100, if the lower panel of the touch screen panel 100 was not to be removed from the portion thereof at which the detection sensor 200 is positioned, some of the light emitted from the light emitting unit 210 of the detection sensor 200 would be diffusedly reflected from the transparent lower substrate 122 before approaching the external object 30 and would enter the light receiving unit 220 of the detection sensor 200, and thus, the detection sensor 200 may incorrectly recognize this as the approach of the external object 30 and may erroneously operate.

However, in the mobile terminal 1 having the touch screen panel 100 according to the present exemplary embodiment, by removing the lower panel 120 of the touch screen panel 100 from the portion thereof at which the detection sensor 200 is positioned, diffused reflection of light that may occur due to a transparent support substrate forming the lower panel 120 can be reduced, thereby preventing an erroneous operation of the detection unit 13 for detecting the approach of the external object 30.

Further, in the portion of the touch screen panel 100 at which the detection sensor 200 is positioned, by removing the lower panel 120 of the touch screen panel 100, the detection sensor 200 installed beneath the touch screen panel 100 can be installed closer to the touch screen panel 100 by a thickness of the removed lower panel 120. That is, as shown in FIGURE 3A, by removing the lower panel 120, a space corresponding to the thickness of the lower panel 120 can be created at a lower part of the touch screen panel 100, and thus the detection sensor 200 can be moved upwards into the space.

Therefore, a proximity distance within which an external object detected by the detection sensor 200 can be increased, and an angle between light emitted from the light emitting unit 210 of the detection sensor 200 and light reflected from the external object 30 and entering the light receiving unit 220 of the detection sensor 200 can be increased. Further, because a proximity distance within which an object can be detected by the detection sensor 200 is increased, for an equivalent position of the external object 30 relative to the touch screen panel 100, i.e., at an equivalent proximity distance, power consumption required for operating the detection sensor 200 can be reduced.

Referring again to FIGURE 3A, light transmittance units 114 and 115 are formed in an upper surface of the touch screen panel 100 corresponding to the portion of the touch screen panel 100 at which the detection sensor 200 is positioned. Preferably, as shown in FIGURE 3A, the light transmittance units 114 and 115 are formed in the upper substrate 111 forming the upper panel 110 corresponding to the portion thereof at which the detection sensor 200 is positioned. The light transmittance units 114 and 115 are formed in a light transmittance path taken by light emitted from the light emitting unit 210 of the detection sensor 200 and by light reflected from the external object 30 and entering the light receiving unit 220 of the detection sensor 200, and at least one light transmittance unit can be formed. FIGURES 3A and 3B illustrate a case where two circular light transmittance units 114 and 115 are formed, respectively, in a portion of the touch screen panel 100 through which light emitted from the light emitting unit 210 of the detection sensor 200 passes, and a portion of the touch screen panel 100 through which light reflected from the external object 30 and entering the light receiving unit 220 of the detection sensor 200 passes. However, the quantity and shape of the light transmittance units 114 and 115 are not limited thereto.

In order to increase a transmittance of light emitted from the light emitting unit 210 of the detection sensor 200 and light reflected from the external object 30 and entering the light receiving unit 220 of the detection sensor 200, the light transmittance units 114 and 115 can be formed transparently. However, when the light transmittance units 114 and 115 are formed transparently, a problem arises that the inside of the mobile terminal 1 is exposed to the outside. In this case, a black-based pigment (or ink) may be used to coat the light transmittance units 114 and 115. However, this then creates a further problem that a transmittance of light, for example, infrared rays emitted from the light emitting unit 210 of the detection sensor 200 and light reflected from the external object 30 entering the light receiving unit 220 of the detection sensor 200, may deteriorate. Further, although not shown, in order to save power of the mobile terminal 1, an illumination sensor can be installed to enable adjustment of lighting of the display unit 11 according to a current light level external to the mobile terminal 1, and it then becomes necessary to approximately adjust a transparency of the light transmittance units 114 and 115 in order to detect an amount of light entering the illumination sensor.

Therefore, the light transmittance units 114 and 115 can be formed using a black pigment and a transparent pigment in consideration of a transmittance of light emitted from the light emitting unit 210 of the detection sensor 200 and light reflected from the external object 30 and entering the light receiving unit 220 of the detection sensor 200. In this case, a mixing ratio of a black pigment and a transparent pigment can be determined in consideration of a transmittance of light necessary for operation of the detection sensor 200 and a transmittance of light necessary for operation of the illumination sensor.

In the present exemplary embodiment, in which the detection sensor 200 is an Infrared Ray (IR) sensor, a 0.6% black pigment in which a black pigment and a transparent pigment are mixed with a ratio of approximately 6:994 is used, and as an experimental result with the 0.6% black pigment, a high transmittance value of infrared rays of about 75% was obtained. This mixing ratio of a black pigment and a transparent pigment is for illustration only and can be changed according to a condition such as a transmittance of light used for operation of the detection sensor 200, a transmittance of light used for operation of the illumination sensor, and a degree of exposure to the outside.

In this way, in the mobile terminal 1 that includes the touch screen panel 100 according to the present exemplary embodiment, the light transmittance units 114 and 115 formed in a light transmittance path taken by light emitted from the light emitting unit 210 of the detection sensor 200 and by light reflected from the external object 30 and entering the light receiving unit 220 of the detection sensor 200 can be formed using a black pigment and a transparent pigment. A transmittance of light emitted from the light emitting unit 210 of the detection sensor 200 and a transmittance of light reflected from the external object 30 and entering the light receiving unit 220 of the detection sensor 200 can thereby be increased, and hence a transmission ability of the detection sensor 200 can be increased. Further, a problem that the inside of the mobile terminal 1 is exposed to the outside through the light transmittance units 114 and 115 of the detection unit 13 can be prevented.

In the present invention, a slide type mobile terminal is illustrated for example purposes, however the present invention is not limited thereto. The present invention can be applied to a rotating type mobile terminal, or to a combination type mobile terminal of a slide type mobile terminal and a rotating type mobile terminal.

As described above, in a mobile terminal that includes a touch screen panel according to an exemplary embodiment of the present invention, by removing a lower panel of a touch screen panel from a portion of the touch screen panel at which a detection sensor is positioned, diffused reflection of light, which may otherwise occur due to a transparent support substrate forming the lower panel, can be reduced, thereby preventing an erroneous operation of a detection unit for detecting the approach of an external object.

Further, because a detection sensor installed beneath the touch screen panel can be installed closer to the touch screen panel by a thickness of the removed lower panel, a proximity distance within which an external object can be detected by the detection sensor can be increased, and power consumption required for operating the detection sensor at an equivalent proximity distance can be reduced.

Further, because the detection sensor installed beneath the touch screen panel can be installed closer to the touch screen panel by a thickness of the removed lower panel, an angle between light emitted from a light emitting unit of the detection sensor and light reflected from an external object and entering a light receiving unit of the detection sensor can be greatly increased.

Further, by forming a light transmittance unit in an upper surface of an upper panel of the touch screen panel corresponding to a portion thereof at which the detection sensor is positioned by mixing a black pigment and a transparent pigment, a transmittance of light emitted from the light emitting unit of the detection sensor and a transmittance of light reflected from the external object and entering the light receiving unit of the detection sensor can be increased, and thereby accuracy of the detection sensor can be increased and a problem that the inside of the mobile terminal is exposed to the outside can be prevented.

Although the present disclosure has been described with an exemplary embodiment, various changes and modifications may be suggested to one skilled in the art. It is intended that the present disclosure encompass such changes and modifications as fall within the scope of the appended claims.

## Claims

1. A mobile terminal comprising:
a touch screen panel installed in an upper surface of a display unit formed in an upper surface of the mobile terminal, the touch screen panel comprising an upper panel and a lower panel disposed opposite each other; and
a detection unit installed in the touch screen panel beneath the lower panel thereof, the detection unit configured to detect an approach of an external object and to determine whether to allow or invalidate an input of a manipulation instruction from a user through the touch screen panel,
wherein a portion of the touch screen panel at which the detection unit is positioned does not include the lower panel of the touch screen panel .

2. The mobile terminal of claim 1, wherein the upper panel comprises an upper substrate that comprises a flexibility for deformation when a manipulation instruction is input by the user and a transparent upper conductive film coated on a lower surface of the upper substrate, and
the lower panel comprises a lower substrate installed in a lower part thereof to support the upper substrate and a transparent lower conductive film coated on an upper surface of the lower substrate, and
wherein a spacer for separating the upper panel and the lower panel is formed between the upper panel and the lower panel.

3. The mobile terminal of claim 2, wherein the lower substrate is one of a glass substrate and a plastic substrate.

4. The mobile terminal of claim 2, wherein the detection unit is installed at a position adjacent to a receiver provided in an upper end portion of the mobile terminal.

5. The mobile terminal of claim 2, wherein the detection unit comprises:
a detection sensor installed beneath the touch screen panel, the detection sensor configured to detect the approach of the external object through light reflected from the external object; and
at least one light transmittance unit formed in an upper surface of the upper panel corresponding to the portion of the touch screen panel at which the detection sensor is positioned.

6. The mobile terminal of claim 5, wherein the at least one light transmittance unit is formed in the upper substrate corresponding to the portion of the touch screen panel at which the detection sensor is positioned.

7. The mobile terminal of claim 5, wherein the at least one light transmittance unit is formed using a black pigment and a transparent pigment mixed in consideration of a transmittance of light emitted from a light emitting unit of the detection sensor and a transmittance of light reflected from the external object and entering a light receiving unit of the detection sensor.

8. The mobile terminal of claim 5, wherein the at least one light transmittance unit is formed in a light transmittance path taken by light emitted from a light emitting unit of the detection sensor and by light reflected from the external object and entering a light receiving unit of the detection sensor.
